# EUROPÄISCHE PATENTANMELDUNG

(11) **EP 4 246 359 A1**
(43) Veröffentlichungstag der Anmeldung: **20.09.2023**
(21) Anmeldenummer: 22162993.4
(22) Anmeldetag: 18.03.2022
(51) Int. Cl.: G06F 21/64, G05B 19/418, H04L 9/00

(54) **VERFAHREN UND SYSTEM ZUR SICHERUNG VON INNERHALB EINES INDUSTRIELLEN AUTOMATISIERUNGSSYSTEMS ERFASSTEN DATEN GEGEN VERFÄLSCHUNG**

(71) Anmelder: Siemens Aktiengesellschaft, 80333 München (DE)
(72) Erfinder: Thurau, Oliver, 67117 Limburgerhof (DE)
(74) Vertreter: Siemens Patent Attorneys

(57) **Zusammenfassung**

Zur Sicherung von innerhalb eines industriellen Automatisierungssystems erfassten Daten (111-113) gegen Verfälschung werden diese Daten sequentiell gespeichert und in Archivsegmenten (210) zusammengefasst. Jedem Archivsegment wird jeweils ein Segment-Identifikator (211) zugeordnet, der in das jeweilige Archivsegment eingefügt wird. Für jedes Archivsegment wird anhand einer vorgegebenen Funktion ein das jeweilige Archivsegment inhaltlich kennzeichnender Segment-Wert (212) berechnet. Die Segment-Identifikatoren (211, 311) und die Segment-Werte (212, 312) umfassende Transaktionsdaten (310) werden jeweils in einer vertrauenswürdigen Transaktionsdatenbank (301-303) gespeichert. Die Archivsegmente werden für eine vorgebbare Zeitdauer und/oder bis zu einer vorgegebenen Datenmenge jeweils in einem der jeweiligen Sensorvorrichtung zugeordneten lokalen Kurzzeit-Archivierungssystem (201) gespeichert. Nach Ablauf der vorgegebenen Zeitdauer und/oder Überschreitung der vorgegebenen Datenmenge werden die Archivsegmente in zumindest ein übergeordnetes Langzeit-Archivierungssystem (202) zur dortigen Speicherung übertragen werden.

## Beschreibung

Die vorliegende Erfindung betrifft ein Verfahren zur Sicherung von innerhalb eines industriellen Automatisierungssystems erfassten Daten gegen Verfälschung und ein System, das zur Durchführung des erfindungsgemäßen Verfahrens geeignet ist.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

WO 2020/120054 A1 betrifft ein computerimplementiertes Verfahren zum Erstellen einer Blockchain mit Blöcken umfassend eine anpassbare Anzahl an Transaktionsblöcken und mehrere Zwischenblöcke. Die Blockchain ist Bestandteil eines verteilten Datenbanksystems. Innerhalb der Blockchain werden Blöcke generiert, die jeweils einen jeweiligen vorhergehenden Block referenzieren. Darüber hinaus sind zumindest ein erster Zwischenblock und ein zweiter Zwischenblock vorgesehen, zwischen denen mindestens ein Transaktionsblock generiert wird. Dabei referenziert der zweite Zwischenblock einen ihm vorhergehenden Block sowie mindestens den ersten Zwischenblock.

In WO 2020/182627 A1 ist ein Verfahren zur Überwachung der Integrität eines industriellen Cyber-physischen Systems beschrieben, bei dem Messdaten, die mit verschiedenen Sensoren des Cyber-physischen Systems erfasst wurden, bzw. Steuerdaten, die für verschiedene Aktuatoren des Cyber-physischen Systems bestimmt sind, bereitgestellt bzw. abgegriffen werden. Außerdem wird wenigstens ein Messdaten-Zusammenhangsparameter zwischen den mit den verschiedenen Sensoren erfassten Messdaten ermittelt, bzw. es wird wenigstens ein Steuerdaten-Zusammenhangsparameter zwischen den für die verschiedenen Aktuatoren bestimmten Steuerdaten ermittelt. Der wenigstens eine Messdaten-Zusammenhangsparameter wird mit einer Messdaten-Zusammenhangs-Referenz verglichen, bzw. der wenigstens eine Steuerdaten-Zusammenhangsparameter wird mit einer Steuerdaten-Zusammenhangs-Referenz verglichen. Basierend auf dem Vergleich wird die Integrität des zu überwachenden Cyber-physischen Systems beurteilt.

Aus WO 2020/212051 A1 ist ein industrielles Automatisierungsgerät bekannt, das eine Überwachungseinheit zur Überprüfung und Überwachung des Integritätszustandes des industriellen Automatisierungsgerätes umfasst. Insbesondere ist zumindest eine Gerätekomponente vorgesehen, die rückwirkungsfrei über eine Kommunikationsverbindung mit der Überwachungseinheit kommuniziert. Dabei umfasst die rückwirkungsfreie Kommunikation ein Bereitstellen wenigstens eines Gerätekomponentenparameters von der Gerätekomponente an die Überwachungseinheit. Die Überwachungseinheit ist dazu ausgebildet, den bereitgestellten Gerätekomponentenparameter der Gerätekomponente des industriellen Automatisierungsgerätes zur Überprüfung und Überwachung des Integritätszustandes des industriellen Automatisierungsgerätes zu protokollieren und zu verarbeiten. Des Weiteren ist die Überwachungseinheit dazu ausgebildet, den Integritätszustand des industriellen Automatisierungsgerätes als Ergebnis des verarbeiteten Gerätekomponentenparameters der Gerätekomponente des industriellen Automatisierungsgerätes zu protokollieren bzw. bereitzustellen. Darüber hinaus ist die Überwachungseinheit als eine vertrauenswürdige Gerätekomponente durch einen Manipulationsschutz manipulationsgeschützt in dem industriellen Automatisierungsgerät ausgebildet.

Bei Datenarchivierungsverfahren ist üblicherweise eine Abwägung zu treffen zwischen Ressourcen-Effizienz einerseits und Datenintegrität andererseits. Werden Daten in einem Datenbanksystem ressourcen-effizient archiviert, lassen sich die Daten in erster Linie performant abfragen. Bisher lässt sich aber nur schwer nachweisen, dass die Daten während einer gesamten Historie oder eines relevanten Zeitbereichs nicht verändert wurden. Umgekehrt lassen sich Daten mit bestehenden Verfahren über einen längeren Zeitraum wirksam gegenüber Verfälschungen sichern. Allerdings weisen derartige Verfahren häufig einen hohen Ressourcenbedarf sowie Performance-Defizite bei Schreib- und Lesevorgängen auf.

Der vorliegenden Erfindung liegt daher die Aufgabe zugrunde, ein ressourcen-effizientes und performantes Verfahren zur Sicherung von innerhalb eines industriellen Automatisierungssystems erfassten Daten gegen Verfälschung zu schaffen sowie geeignete Mittel zur Durchführung des Verfahrens anzugeben.

Diese Aufgabe wird erfindungsgemäß durch ein Verfahren mit den in Patentanspruch 1 angegebenen Merkmalen und durch ein System mit den in Patentanspruch 14 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren werden Daten durch einem Automatisierungsprozess zugeordnete Sensorvorrichtungen erfasst. Die erfassten Daten werden sequentiell, insbesondere in Zeitreihen, gespeichert und in Archivsegmenten zusammengefasst. Jedem Archivsegment wird jeweils ein Segment-Identifikator zugeordnet, der in das jeweilige Archivsegment eingefügt wird. Anhand einer vorgegebenen Funktion wird für jedes Archivsegment ein das jeweilige Archivsegment inhaltlich kennzeichnender Segment-Wert berechnet. Die durch die Sensorvorrichtungen erfassten Daten können beispielsweise Messwerte, Prozesszustandswerte bzw. Alarme umfassen. Insbesondere können in den Archivsegmenten jeweils Daten einer Quelle bzw. einer Gruppe von Sensorvorrichtungen als Zeitreihen zusammengefasst werden. Die Segment-Identifikatoren sind vorteilhafterweise für sich oder in Kombination mit einer Archivierungssystem-Kennung eindeutig.

Die Segment-Werte sind vorzugsweise jeweils Hashwerte. In diesem Fall ist die vorgegebene Funktion eine Hashfunktion. Die Hashfunktion wird vorteilhafterweise über das jeweilige Archivsegment einschließlich des Segment-Identifikators und einschließlich einer digitalen Signatur der erfassten Daten berechnet. Alternativ bzw. zusätzlich kann die Hashfunktion über das jeweilige Archivsegment einschließlich des Segment-Identifikators berechnet werden, wobei die Segment-Werte jeweils in ein nachfolgendes Archivsegment eingefügt werden. Durch eine derartige Verkettung kann ein nochmals erhöhter Schutz der Daten gegen Manipulationen erzielt werden.

Die Segment-Identifikatoren und die Segment-Werte umfassende Transaktionsdaten werden erfindungsgemäß jeweils in einer vertrauenswürdigen Transaktionsdatenbank gespeichert. Darüber hinaus werden die Archivsegmente für eine vorgebbare Zeitdauer bzw. bis zu einer vorgegebenen Datenmenge jeweils in einem der jeweiligen Sensorvorrichtung zugeordneten lokalen Kurzzeit-Archivierungssystem gespeichert. Nach Ablauf der vorgegebenen Zeitdauer bzw. Überschreitung der vorgegebenen Datenmenge werden die Archivsegmente in zumindest ein übergeordnetes Langzeit-Archivierungssystem zur dortigen Speicherung übertragen.

Dadurch dass Transaktionsdaten zu Archivsegmenten und nicht nur zu einzelnen Daten in der vertrauenswürdigen Transaktionsdatenbank verankert werden, ist das erfindungsgemäße Verfahren sehr ressourcen-effizient. Insbesondere umfassen die Transaktionsdaten dabei nicht die Archivsegmente selbst, die vielmehr zunächst prozessnah und damit Performance-steigernd im Kurzzeit-Archivierungssystem gespeichert werden. Die vertrauenswürdige Transaktionsdatenbank und das Kurzzeit-Archivierungssystem sind also hinsichtlich ihrer Inhalte als orthogonal zueinander zu betrachten.

Entsprechend einer besonders bevorzugten Ausführungsform der vorliegenden Erfindung umfassen die Transaktionsdaten neben den Segment-Identifikatoren und den Segment-Werten Zeitstempel für eine jeweilige Erstellung der Archivsegmente. Außerdem ist die vertrauenswürdige Transaktionsdatenbank durch ein Distributed-Ledger-Speichersystem gebildet. Damit kann auf eine Vielzahl bewährter Lösungen zur schnellen und aufwandsarmen Realisierung der vertrauenswürdige Transaktionsdatenbank zurückgegriffen werden. Des Weiteren können die erfassten Daten logisch oder physikalisch in den Archivsegmenten zusammengefasst werden. Somit können die Archivsegmente flexibel je nach Anwendungserfordernissen gebildet werden.

Vorzugsweise sind die durch die Sensorvorrichtungen erfassten Daten durch die jeweilige Sensorvorrichtung digital signiert. In diesem Fall werden die erfassten Daten nur bei einer erfolgreichen Signatur-Verifizierung in die Archivsegmente übernommen. Dies ergibt eine weitere Performance- und Effizienz-Verbesserung. Des Weiteren können die Archivsegmente für eine nochmals erhöhte Sicherheit in redundanten Kurzzeit-Archivierungssystemen gespeichert werden. Dabei werden die Segment-Identifikatoren vorteilhafterweise durch ein Archivverwaltungssystem erzeugt, und die Segment-Identifikatoren werden zusätzlich im Archivverwaltungssystem hinterlegt.

Entsprechend einer vorteilhaften Ausgestaltung der vorliegenden Erfindung wird für jedes Archivsegment bei Übertragung in das Langzeit-Archivierungssystem erneut anhand der vorgegebenen Funktion ein das jeweilige Archivsegment inhaltlich kennzeichnender Segment-Wert durch das Langzeit-Archivierungssystem berechnet. Dementsprechend werden die erneut berechneten Segment-Werte umfassende Transaktionsdaten jeweils in der vertrauenswürdigen Transaktionsdatenbank gespeichert. Dies ist insbesondere bei hohen Sicherheitsanforderungen vorteilhaft. Entsprechend einer alternativen Ausführungsform bleiben die Segment-Werte umfassenden Transaktionsdaten nach Übertragung der Archivsegmente in das Langzeit-Archivierungssystem unverändert in der vertrauenswürdigen Transaktionsdatenbank gespeichert. Diese Alternative ist unter Performance-Aspekten attraktiv.

Auf Basis des erfindungsgemäßen Verfahrens kann beispielsweise ein je nach Anwendungserfordernissen nutzbarer Trust Service realisiert werden, indem für die lokalen Kurzzeit-Archivierungssysteme bzw. für das übergeordnete Langzeit-Archivierungssystem eine Sicherheitsdienst-Schnittstelle verfügbar gemacht wird. Diese Sicherheitsdienst-Schnittstelle dient insbesondere zur Verankerung von Segment-Werte umfassenden Transaktionsdaten in einer vertrauenswürdigen Transaktionsdatenbank und zur Verifizierung von Segment-Werten mittels in einer vertrauenswürdigen Transaktionsdatenbank verankerten Transaktionsdaten.

Die Sicherheitsdienst-Schnittstelle ist vorteilhaftweise mit zumindest einem Datenbank-Adapter gekoppelt, mittels dessen eine vertrauenswürdige Transaktionsdatenbank zur Verankerung und Verifizierung der Segment-Werte ausgewählt wird. Somit kann beispielsweise eine Vielzahl unterschiedlicher Distributed-Ledger-Speichersysteme alternativ zueinander genutzt werden. Zur Verankerung der Segment-Werte über die Sicherheitsdienst-Schnittstelle und über den Datenbank-Adapter übergeben die Kurzzeit-Archivierungssysteme bzw. das Langzeit-Archivierungssystem vorzugsweise zumindest jeweils den Segment-Identifikator, den Segment-Wert und eine Archivierungssystem-Kennung als Parameter an die ausgewählte vertrauenswürdige Transaktionsdatenbank. Damit eine zuverlässige und effiziente Übergabe sämtlicher relevanter Parameter zur Nutzung der Sicherheitsdienst-Schnittstelle gewährleistet.

Entsprechend einer weiteren Ausgestaltung der vorliegenden Erfindung ist der ausgewählten vertrauenswürdigen Transaktionsdatenbank eine erste Funktion zur Verankerung von Segment-Werten zugeordnet, die entsprechend den über die Sicherheitsdienst-Schnittstelle übergebenen Parametern ausgeführt wird. Darüber hinaus ist der ausgewählten vertrauenswürdigen Transaktionsdatenbank vorzugsweise eine zweite Funktion zur Verifizierung von Segment-Werten zugeordnet. Dabei berechnen die Kurzzeit-Archivierungssysteme bzw. das Langzeit-Archivierungssystem zur Verifizierung für ein zu prüfendes Archivsegment anhand der vorgegebenen Funktion den Segment-Wert erneut.

Insbesondere werden zur Verifizierung der Segment-Werte jeweils zumindest der erneut berechnete Segment-Wert, der jeweilige Segment-Identifikator und die Archivierungssystem-Kennung als Parameter über die Sicherheitsdienst-Schnittstelle und über den Datenbank-Adapter an die ausgewählte vertrauenswürdige Transaktionsdatenbank übergeben. Der übergebene erneut berechnete Segment-Wert wird durch die oben genannte zweite Funktion anhand der in der ausgewählten vertrauenswürdigen Transaktionsdatenbank gespeicherten Transaktionsdaten überprüft. Der übergebene erneut berechnete Segment-Wert wird erfolgreich verifiziert, wenn der erneut berechnete Segment-Wert und der jeweilige Segment-Identifikator einem Element innerhalb der ausgewählten vertrauenswürdigen Transaktionsdatenbank entsprechen. Auf diese Weise wird eine zuverlässige Verifizierung von Segment-Werten über eine dedizierte Sicherheitsdienst-Schnittstelle realisiert.

Das erfindungsgemäße System zur Sicherung von innerhalb eines industriellen Automatisierungssystems erfassten Daten gegen Verfälschung ist zur Durchführung eines Verfahrens entsprechend vorangehenden Ausführungen vorgesehen und umfasst mehrere Kurzzeit-Archivierungssysteme für jeweils eine Mehrzahl von Sensorvorrichtungen sowie ein den Kurzzeit-Archivierungssystemen übergeordnetes Langzeit-Archivierungssystem. Die Kurzzeit-Archivierungssysteme sind jeweils dafür ausgestaltet und eingerichtet, Daten zu empfangen, die durch einem Automatisierungsprozess zugeordnete Sensorvorrichtungen erfasst sind. Außerdem sind die Kurzzeit-Archivierungssysteme jeweils dafür ausgestaltet und eingerichtet, die erfassten Daten sequentiell zu speichern und in Archivsegmenten zusammenzufassen.

Erfindungsgemäß sind die Kurzzeit-Archivierungssysteme jeweils ferner dafür ausgestaltet und eingerichtet, jedem Archivsegment jeweils einen Segment-Identifikator zuzuordnen und in das jeweilige Archivsegment einzufügen. Darüber hinaus sind die Kurzzeit-Archivierungssysteme jeweils dafür ausgestaltet und eingerichtet, für jedes Archivsegment anhand einer vorgegebenen Funktion einen das jeweilige Archivsegment inhaltlich kennzeichnenden Segment-Wert zu berechnen und jeweils eine Speicherung von die Segment-Identifikatoren und die Segment-Werte umfassende Transaktionsdaten in einer vertrauenswürdigen Transaktionsdatenbank zu veranlassen. Des Weiteren sind die Kurzzeit-Archivierungssysteme jeweils dafür ausgestaltet und eingerichtet, die Archivsegmente für eine vorgebbare Zeitdauer bzw. bis zu einer vorgegebenen Datenmenge lokal zu speichern und die Archivsegmente nach Ablauf der vorgegebenen Zeitdauer in das Langzeit-Archivierungssystem zur dortigen Speicherung zu übertragen.

Die vorliegende Erfindung wird nachfolgend an einem Ausführungsbeispiel anhand der Zeichnung näher erläutert. Es zeigt
- Figur 1: ein System zur Sicherung von innerhalb eines industriellen Automatisierungssystems erfassten Daten gegen Verfälschung,
- Figur 2: eine Anordnung mit einer Sicherheitsdienst-Schnittstelle zur Verankerung von Transaktionsdaten in vertrauenswürdigen Transaktionsdatenbanken und mit Datenbank-Adaptern.

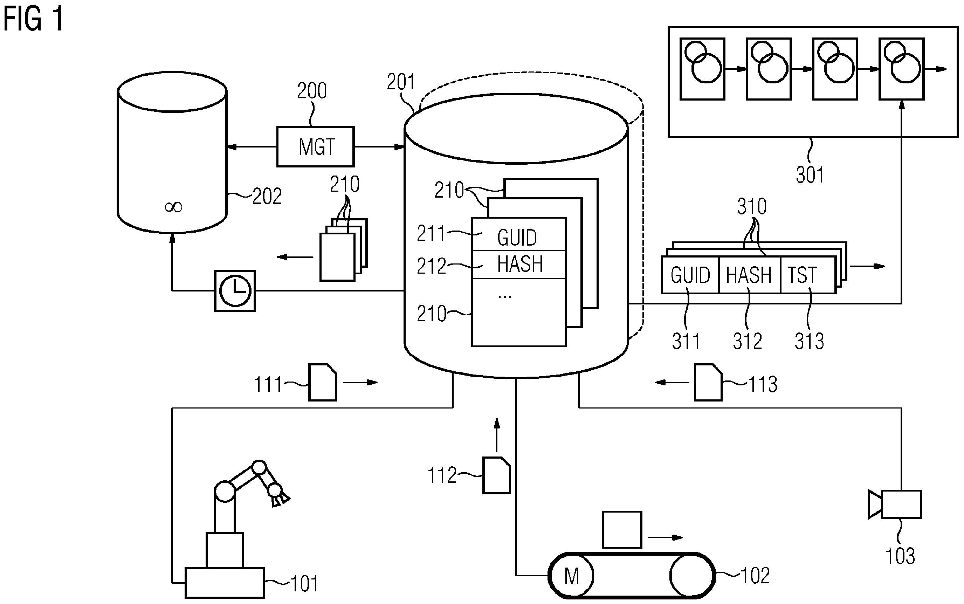

Das in Figur 1 dargestellte System umfasst mehrere Automatisierungsgeräte 101-103, die jeweils zumindest eine Sensorvorrichtung umfassen, zumindest ein lokales, prozessnah angeordnetes Kurzzeit-Archivierungssystem 201, ein übergeordnetes Langzeit-Archivierungssystem 202 und eine vertrauenswürdige Transaktionsdatenbank 301. Im vorliegenden Ausführungsbeispiel erfassen die Automatisierungsgeräte zu archivierende und mittels der vertrauenswürdigen Transaktionsdatenbank 301 gegen Verfälschung zu sichernde Daten 111-113. Diese Daten 111-113 können insbesondere Messwerte, Prozesszustandswerte bzw. Alarme umfassen. Die vertrauenswürdige Transaktionsdatenbank 301 wird vorzugsweise durch ein Distributed-Ledger-Speichersystem gebildet.

Die erfassten Daten 111-113 werden sequentiell in Zeitreihen gespeichert und in Archivsegmenten 210 zusammengefasst. Dabei können die erfassten Daten 111-113 logisch oder physikalisch in den Archivsegmenten 210 zusammengefasst werden. Vorteilhafterweise sind die durch die Automatisierungsgeräte 101-103 mittels ihrer Sensorvorrichtungen erfassten Daten durch das jeweilige Automatisierungsgerät 101-103 bzw. durch die jeweilige Sensorvorrichtung digital signiert und werden nur bei einer erfolgreichen Signatur-Verifizierung durch das Kurzzeit-Archivierungssystem 201 in die Archivsegmente 210 übernommen.

Jedem Archivsegment wird jeweils ein Segment-Identifikator 211 zugeordnet, der in das jeweilige Archivsegment 210 eingefügt wird. Die Segment-Identifikatoren 211 sind entweder für sich oder in Kombination mit einer Archivierungssystem-Kennung global eindeutig. Darüber hinaus wird für jedes Archivsegment anhand einer vorgegebenen Funktion ein das jeweilige Archivsegment inhaltlich kennzeichnender Segment-Wert 212 berechnet.

Insbesondere können die Segment-Werte jeweils Hashwerte sein. Dabei ist die vorgegebene Funktion eine Hashfunktion. Die Hashfunktion kann beispielsweise über das jeweilige Archivsegment 210 einschließlich des Segment-Identifikators 211 und einschließlich einer digitalen Signatur der erfassten Daten 111-113 berechnet werden. Grundsätzlich ist es auch möglich, dass die Hashfunktion über das jeweilige Archivsegment einschließlich des Segment-Identifikators berechnet wird, und dass die Segment-Werte 212 jeweils in ein nachfolgendes Archivsegment 210 eingefügt werden. Somit können die Archivsegmente 210 bereits im Kurzzeit-Archivierungssystem 201 verkettet werden. Außerdem können die Archivsegmente 210 in redundanten Kurzzeit-Archivierungssystemen 201 gespeichert werden. In diesem Fall werden die Segment-Identifikatoren 211 durch ein Archivverwaltungssystem 200 erzeugt und zusätzlich im Archivverwaltungssystem 200 hinterlegt.

Die Segment-Identifikatoren 211, 311 und die Segment-Werte 212, 312 umfassende Transaktionsdaten 310 werden jeweils in der vertrauenswürdigen Transaktionsdatenbank 301 gespeichert und dort durch Verkettung mit zuvor gespeicherten Transaktionsdaten verankert. Im vorliegenden Ausführungsbeispiel umfassen die Transaktionsdaten 310 neben den Segment-Identifikatoren 311 und den Segment-Werten 312 Zeitstempel 313 für einen jeweiligen Erstellungszeitpunkt der Archivsegmente 210.

Die Archivsegmente 210 werden für eine vorgebbare Zeitdauer bzw. bis zu einer vorgegebenen Datenmenge jeweils in dem den Automatisierungsgeräten 101-103 zugeordneten lokalen Kurzzeit-Archivierungssystem 201 gespeichert. Nach Ablauf der vorgegebenen Zeitdauer bzw. Überschreitung der vorgegebenen Datenmenge werden die Archivsegmente 210 in zumindest das übergeordnete Langzeit-Archivierungssystem 202 zur dortigen Speicherung übertragen.

Liegen besonders lange Aufbewahrungszeiträume oder erhöhte Sicherheitsanforderungen vor, wird für jedes Archivsegment bei Übertragung in das Langzeit-Archivierungssystem 202 vorteilhafterweise erneut anhand der vorgegebenen Funktion ein das jeweilige Archivsegment 210 inhaltlich kennzeichnender Segment-Wert 212 durch das Langzeit-Archivierungssystem 202 berechnet. In diesem Fall werden die erneut berechneten Segment-Werte 212, 312 und aktuelle Zeitstempel 313 umfassende neue Transaktionsdaten 310 jeweils in der vertrauenswürdigen Transaktionsdatenbank 301 gespeichert und dort verankert. Grundsätzlich kann alternativ hierzu auch vorgesehen sein, dass die Segment-Werte 212, 312 nicht erneut berechnet werden und die jeweiligen Transaktionsdaten 310 nach Übertragung der Archivsegmente 210 in das Langzeit-Archivierungssystem 202 unverändert in der vertrauenswürdigen Transaktionsdatenbank 301 gespeichert und verankert bleiben.

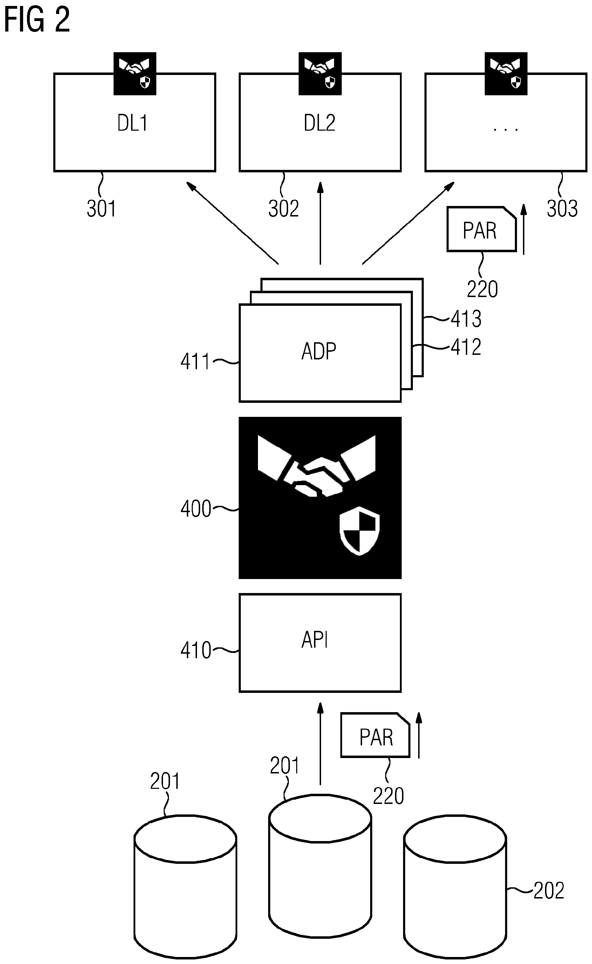

Entsprechend Figur 2 wird für lokalen Kurzzeit-Archivierungssysteme 201 und für das übergeordnete Langzeit-Archivierungssystem 202 ein Trust Service 400 eine Sicherheitsdienst-Schnittstelle 410 zur Verankerung von Segment-Werte 212, 312 umfassenden Transaktionsdaten 310 in einer auswählbaren vertrauenswürdigen Transaktionsdatenbank 301-303 und zur Verifizierung von Segment-Werten 212 mittels in einer ausgewählten vertrauenswürdigen Transaktionsdatenbank 301-3003 verankerten Transaktionsdaten 310 verfügbar gemacht.

Die Sicherheitsdienst-Schnittstelle 410 ist API (application programming interface) ausgestaltet und mit mehreren Datenbank-Adaptern 411-413 für unterschiedliche Distributed Ledger-Technologien, wie Blockchain, Ethereum oder Hyperledger, bzw. für unterschiedliche Distributed Ledger-Netzwerke gekoppelt. Mittels der Datenbank-Adapter 411-413 wird eine vertrauenswürdige Transaktionsdatenbank 301-303 zur Verankerung und Verifizierung der Segment-Werte 212, 312 ausgewählt.

Die Kurzzeit-Archivierungssysteme 201 bzw. das Langzeit-Archivierungssystem 202 übergeben im vorliegenden Ausführungsbeispiel zumindest jeweils den Segment-Identifikator 211, den Segment-Wert 212 und eine Archivierungssystem-Kennung als Parameter 220 zur Verankerung der Segment-Werte 212 über die Sicherheitsdienst-Schnittstelle 410 und den jeweiligen Datenbank-Adapter 411-413 an die ausgewählte vertrauenswürdige Transaktionsdatenbank 301-303.

Den vertrauenswürdigen Transaktionsdatenbanken 301-303 ist jeweils eine Anchor-Funktion zur Verankerung von Segment-Werten 212, 312 zugeordnet, die entsprechend den über die Sicherheitsdienst-Schnittstelle 410 übergebenen Parametern 220 ausgeführt wird. Außerdem ist den vertrauenswürdigen Transaktionsdatenbanken jeweils eine Proof-Funktion zur Verifizierung von Segment-Werten 212, 312 zugeordnet. Zur Verifizierung berechnen die Kurzzeit-Archivierungssysteme 201 bzw. das Langzeit-Archivierungssystem 202 für ein zu prüfendes Archivsegment 210 anhand der vorgegebenen Funktion erneut den Segment-Wert 212, 312. Der erneut berechnete Segment-Wert 212, 312, der jeweilige Segment-Identifikator 211, 311 und die Archivierungssystem-Kennung werden dann als Parameter 220 zur Verifizierung des Segment-Werts 212, 312 über die Sicherheitsdienst-Schnittstelle 410 und über den jeweiligen Datenbank-Adapter 411-413 an die ausgewählte vertrauenswürdige Transaktionsdatenbank 301-3033 übergeben.

Der übergebene erneut berechnete Segment-Wert 212, 312 wird durch die Proof-Funktion anhand der in der ausgewählten vertrauenswürdigen Transaktionsdatenbank 301-303 gespeicherten Transaktionsdaten 310 überprüft. Wenn der erneut berechnete Segment-Wert 212, 312 und der jeweilige Segment-Identifikator 211, 311 einem Element innerhalb der ausgewählten vertrauenswürdigen Transaktionsdatenbank 301-303 entsprechen, wird der übergebene erneut berechnete Segment-Wert 212, 312 erfolgreich verifiziert.

## Patentansprüche

1. Verfahren zur Sicherung von innerhalb eines industriellen Automatisierungssystems erfassten Daten gegen Verfälschung, bei dem
- die Daten (111-113) durch einem Automatisierungsprozess zugeordnete Sensorvorrichtungen (101-103) erfasst werden,
- die erfassten Daten sequentiell gespeichert und in Archivsegmenten (210) zusammengefasst werden,
- jedem Archivsegment jeweils ein Segment-Identifikator (211) zugeordnet wird, der in das jeweilige Archivsegment eingefügt wird,
- für jedes Archivsegment anhand einer vorgegebenen Funktion ein das jeweilige Archivsegment inhaltlich kennzeichnender Segment-Wert (212) berechnet wird,
- die Segment-Identifikatoren (211, 311) und die Segment-Werte (212, 312) umfassende Transaktionsdaten (310) jeweils in einer vertrauenswürdigen Transaktionsdatenbank (301-303) gespeichert werden,
- die Archivsegmente für eine vorgebbare Zeitdauer und/oder bis zu einer vorgegebenen Datenmenge jeweils in einem der jeweiligen Sensorvorrichtung zugeordneten lokalen Kurzzeit-Archivierungssystem (201) gespeichert werden,
- die Archivsegmente nach Ablauf der vorgegebenen Zeitdauer und/oder Überschreitung der vorgegebenen Datenmenge in zumindest ein übergeordnetes Langzeit-Archivierungssystem (202) zur dortigen Speicherung übertragen werden.

2. Verfahren nach Anspruch 1,
bei dem die durch die Sensorvorrichtungen erfassten Daten Messwerte, Prozesszustandswerte und/oder Alarme umfassen.

3. Verfahren nach einem der Ansprüche 1 oder 2,
bei dem die durch die Sensorvorrichtungen erfassten Daten durch die jeweilige Sensorvorrichtung digital signiert sind und bei dem die erfassten Daten nur bei einer erfolgreichen Signatur-Verifizierung in die Archivsegmente übernommen werden.

4. Verfahren nach einem der Ansprüche 1 bis 3,
bei dem die Segment-Werte jeweils Hashwerte sind und bei dem die vorgegebene Funktion eine Hashfunktion ist, die über das jeweilige Archivsegment einschließlich des Segment-Identifikators und einschließlich einer digitalen Signatur der erfassten Daten berechnet wird.

5. Verfahren nach einem der Ansprüche 1 bis 4,
bei dem die Segment-Werte jeweils Hashwerte sind, bei dem die vorgegebene Funktion eine Hashfunktion ist, die über das jeweilige Archivsegment einschließlich des Segment-Identifikators berechnet wird, und bei dem die Segment-Werte jeweils in ein nachfolgendes Archivsegment eingefügt werden.

6. Verfahren nach einem der Ansprüche 1 bis 5,
bei dem die Archivsegmente (210) in redundanten Kurzzeit-Archivierungssystemen (201) gespeichert werden, bei dem die Segment-Identifikatoren (211) durch ein Archivverwaltungssystem (200) erzeugt werden und bei dem die Segment-Identifikatoren zusätzlich im Archivverwaltungssystem hinterlegt werden.

7. Verfahren nach einem der Ansprüche 1 bis 6,
bei dem für jedes Archivsegment bei Übertragung in das Langzeit-Archivierungssystem erneut anhand der vorgegebenen Funktion ein das jeweilige Archivsegment inhaltlich kennzeichnender Segment-Wert durch das Langzeit-Archivierungssystem berechnet wird und bei dem die erneut berechneten Segment-Werte umfassende Transaktionsdaten jeweils in der vertrauenswürdigen Transaktionsdatenbank gespeichert werden.

8. Verfahren nach einem der Ansprüche 1 bis 6,
bei dem die die Segment-Werte umfassenden Transaktionsdaten nach Übertragung der Archivsegmente in das Langzeit-Archivierungssystem unverändert in der vertrauenswürdigen Transaktionsdatenbank gespeichert bleiben.

9. Verfahren nach einem der Ansprüche 1 bis 8,
bei dem für die lokalen Kurzzeit-Archivierungssysteme und/oder für das übergeordnete Langzeit-Archivierungssystem eine Sicherheitsdienst-Schnittstelle zur Verankerung von Segment-Werte umfassenden Transaktionsdaten in einer vertrauenswürdigen Transaktionsdatenbank und zur Verifizierung von Segment-Werten mittels in einer vertrauenswürdigen Transaktionsdatenbank verankerten Transaktionsdaten verfügbar gemacht wird, bei dem die Sicherheitsdienst-Schnittstelle mit zumindest einem Datenbank-Adapter gekoppelt ist, mittels dessen eine vertrauenswürdige Transaktionsdatenbank zur Verankerung und Verifizierung der Segment-Werte ausgewählt wird, und bei dem die Kurzzeit-Archivierungssysteme und/oder das Langzeit-Archivierungssystem zumindest jeweils den Segment-Identifikator, den Segment-Wert und eine Archivierungssystem-Kennung als Parameter zur Verankerung der Segment-Werte über die Sicherheitsdienst-Schnittstelle und den Datenbank-Adapter an die ausgewählte vertrauenswürdige Transaktionsdatenbank übergeben.

10. Verfahren nach Anspruch 9,
bei dem der ausgewählten vertrauenswürdigen Transaktionsdatenbank eine erste Funktion zur Verankerung von Segment-Werten zugeordnet ist und bei dem die erste Funktion entsprechend den über die Sicherheitsdienst-Schnittstelle übergebenen Parametern ausgeführt wird.

11. Verfahren nach einem der Ansprüche 9 oder 10,
bei dem der ausgewählten vertrauenswürdigen Transaktionsdatenbank eine zweite Funktion zur Verifizierung von Segment-Werten zugeordnet ist, bei dem die Kurzzeit-Archivierungssysteme und/oder das Langzeit-Archivierungssystem zur Verifizierung für ein zu prüfendes Archivsegment anhand der vorgegebenen Funktion den Segment-Wert erneut berechnen, bei dem jeweils zumindest der erneut berechnete Segment-Wert, der jeweilige Segment-Identifikator und die Archivierungssystem-Kennung als Parameter zur Verifizierung der Segment-Werte über die Sicherheitsdienst-Schnittstelle und den Datenbank-Adapter an die ausgewählte vertrauenswürdige Transaktionsdatenbank übergeben werden, bei dem der übergebene erneut berechnete Segment-Wert durch die zweite Funktion anhand der in der ausgewählten vertrauenswürdigen Transaktionsdatenbank gespeicherten Transaktionsdaten überprüft wird und bei dem der übergebene erneut berechnete Segment-Wert erfolgreich verifiziert wird, wenn der erneut berechnete Segment-Wert und der jeweilige Segment-Identifikator einem Element innerhalb der ausgewählten vertrauenswürdigen Transaktionsdatenbank entsprechen.

12. Verfahren nach einem der Ansprüche 1 bis 11,
bei dem die erfassten Daten logisch oder physikalisch in den Archivsegmenten zusammengefasst werden und bei dem die Segment-Identifikatoren für sich oder in Kombination mit einer Archivierungssystem-Kennung eindeutig sind.

13. Verfahren nach einem der Ansprüche 1 bis 11,
bei dem die Transaktionsdaten (310) neben den Segment-Identifikatoren (311) und den Segment-Werten (312) Zeitstempel (313) für eine jeweilige Erstellung der Archivsegmente (210) umfassen und bei dem die vertrauenswürdige Transaktionsdatenbank (301-303) durch ein Distributed-Ledger-Speichersystem gebildet ist.

14. System zur Sicherung von innerhalb eines industriellen Automatisierungssystems erfassten Daten gegen Verfälschung mit
- mehreren Kurzzeit-Archivierungssystemen (201) für jeweils eine Mehrzahl von Sensorvorrichtungen (101-103),
- einem den Kurzzeit-Archivierungssystemen übergeordneten Langzeit-Archivierungssystem (202),
- wobei die Kurzzeit-Archivierungssysteme jeweils dafür ausgestaltet und eingerichtet sind, Daten (111-113) zu empfangen, die durch einem Automatisierungsprozess zugeordnete Sensorvorrichtungen erfasst sind,
- wobei die Kurzzeit-Archivierungssysteme jeweils ferner dafür ausgestaltet und eingerichtet sind, die erfassten Daten sequentiell zu speichern und in Archivsegmenten (210) zusammenzufassen,
- wobei die Kurzzeit-Archivierungssysteme jeweils ferner dafür ausgestaltet und eingerichtet sind, jedem Archivsegment jeweils einen Segment-Identifikator (211) zuzuordnen und in das jeweilige Archivsegment einzufügen,
- wobei die Kurzzeit-Archivierungssysteme jeweils ferner dafür ausgestaltet und eingerichtet sind, für jedes Archivsegment anhand einer vorgegebenen Funktion einen das jeweilige Archivsegment inhaltlich kennzeichnenden Segment-Wert (212) zu berechnen und jeweils eine Speicherung von die Segment-Identifikatoren und die Segment-Werte umfassende Transaktionsdaten in einer vertrauenswürdigen Transaktionsdatenbank (301-303) zu veranlassen,
- wobei die Kurzzeit-Archivierungssysteme jeweils ferner dafür ausgestaltet und eingerichtet sind, die Archivsegmente für eine vorgebbare Zeitdauer und/oder bis zu einer vorgegebenen Datenmenge lokal zu speichern und die Archivsegmente nach Ablauf der vorgegebenen Zeitdauer in das Langzeit-Archivierungssystem zur dortigen Speicherung zu übertragen.
